# EUROPÄISCHE PATENTSCHRIFT

(11) **EP 3 474 688 B1**
(45) Veröffentlichungstag und Bekanntmachung des Hinweises auf die Patenterteilung: **09.08.2023**
(21) Anmeldenummer: 17733983.5
(22) Anmeldetag: 08.06.2017
(51) Int. Cl.: A23P 30/20, A23P 20/20

(54) **NAHRUNGSMITTELDRUCKER MIT BEWEGUNGSKOORDINATEN**
FOOD PRINTER WITH MOVEMENT COORDINATES
IMPRIMANTE DE DENREES ALIMENTAIRES AVEC COORDONNÉES DE DÉPLACEMENT

(30) Priorität: 22.06.2016 DE 102016211157
(43) Veröffentlichungstag der Anmeldung: 01.05.2019
(73) Patentinhaber: BSH Hausgeräte GmbH, 81739 München (DE)
(72) Erfinder: ERBE, Sebastian, DE 75438 Knittlingen-Freudenstein (DE); GÜL, Ugur Dogan, 34394 Istanbul (TR); SCHUSTER, Lucia, DE 70197 Stuttgart (DE); SUAREZ IRIBARNE, Alvaro, ES 08002 Barcelona (ES)
(86) Internationale Anmeldenummer: PCT/EP2017/063970
(87) Internationale Veröffentlichungsnummer: WO 2017/220334

(56) Entgegenhaltungen:
- EP-A1- 2 364 593
- WO-A2-2012/103005
- US-A- 4 670 271
- US-A1- 2012 328 747
- US-A1- 2016 009 029

## Beschreibung

Die Erfindung betrifft ein System, insbesondere ein Hausgerät bzw. Haushaltsgerät, zum Druck und Garen eines Nahrungsmittels.

Nahrungsmitteldrucker können dazu verwendet werden, aus einer essbaren Druckmasse eine räumliche Anordnung von Druckmasse zu erzeugen, die im Anschluss an den Druckvorgang gegart werden kann (z.B. in einem separaten Ofen), um ein individualisiertes, gegartes Nahrungsmittel bereitzustellen.

Aus der US 2016 / 009 029 A1 ist ein 3D-Druckverfahren bekannt, das mehrere Materialien verwenden kann. Die EP 2 364 593 A1 beschreibt eine kommerzielle Produktionsstraße für Pfannkuchen. Die WO 2012 / 103 005 A2 beschäftigt sich mit einem Nahrungsmitteldrucker. Die US 4 670 271 A zeigt einen 3D-Nahrungsmitteldrucker, der Bilder auf Torten drucken kann.

Das vorliegende Dokument befasst sich mit der technischen Aufgabe, ein System zur Herstellung eines individualisierten, gegarten Nahrungsmittels bereitzustellen, das eine kompakten Aufbau aufweist und das einen Energie-effizienten und Zeit-effizienten Druck- und Garprozess ermöglicht.

Die Aufgabe wird durch den Gegenstand des unabhängigen Patentanspruchs gelöst. Vorteilhafte Ausführungsformen sind insbesondere in den abhängigen Patentansprüchen definiert, in nachfolgender Beschreibung beschrieben oder in den Figuren der beigefügten Zeichnung dargestellt.

Gemäß einem Aspekt der Erfindung wird ein System zur Herstellung eines Nahrungsmittels beschrieben. Das System kann auch als Nahrungsmitteldrucker bezeichnet werden. Das System kann dabei als ein Hausgerät, insbesondere als ein Haushaltsgerät, ausgebildet sein, das z.B. auf die Arbeitsplatte einer Küche gestellt werden kann und/oder das als Einbaugerät in einen Küchenschrank eingebaut werden kann.

Das System umfasst eine Ablageplatte, die z.B. kreisförmig sein kann. Des Weiteren umfasst das System einen Druckkopf, der oberhalb der Ablageplatte angeordnet ist und der eingerichtet ist, essbare Druckmasse zu extrudieren, um eine räumliche Anordnung von Druckmasse auf der Ablageplatte zu generieren. Der Druckkopf kann die Druckmasse z.B. aus ein oder mehreren Kartuschen bzw. Patronen entnehmen und über ein oder mehrere Düsen extrudieren. Dabei können die ein oder mehreren Düsen relativ nah an der Ablageplatte angeordnet sein (z.B. derart, dass der Abstand zu einer Fläche auf der Ablageplatte, auf der die Druckmasse aufzubringen ist, kleiner als oder gleich wie der Durchmesser eines extrudierten Strangs an Druckmasse ist). Die Druckmasse kann dann (z.B. aufgrund der Schwerkraft und/oder aufgrund eines Anpressdrucks aus den ein oder mehreren Düsen) auf die Ablageplatte aufgebracht werden und dort eine räumliche Anordnung von Druckmasse bilden. Ggf. können anhand von unterschiedlichen Düsen des Druckkopfes unterschiedliche Typen von Druckmasse ausgetrieben werden. So können komplexe Nahrungsmittel hergestellt werden.

Das System umfasst außerdem einen Garkopf, der oberhalb der Ablageplatte angeordnet ist und der eingerichtet ist, eine räumliche Anordnung von Druckmasse auf der Ablageplatte zu garen. Insbesondere kann der Garkopf eingerichtet sein: thermische Energie auf eine Oberseite der Ablageplatte (und insbesondere auf zumindest einen Teil einer räumlichen Anordnung von Druckmasse) zu strahlen; Laserstrahlen auf die Oberseite der Ablageplatte (und insbesondere auf zumindest einen Teil einer räumlichen Anordnung von Druckmasse) zu strahlen; und/oder Ultraschallwellen auf die Oberseite der Ablageplatte (und insbesondere auf zumindest einen Teil einer räumlichen Anordnung von Druckmasse) zu strahlen. Durch die Verwendung eines Garkopfes kann (ggf. bereits während des Druckprozesses) ein (ggf. lokalisierter) Druckprozess durchgeführt werden, um aus einer räumlichen Anordnung von Druckmasse ein gegartes Nahrungsmittel herzustellen. Die Bereitstellung eines Garkopfes in Kombination mit einem Druckkopf ermöglicht eine Beschleunigung des Herstellungsprozesses sowie die Herstellung von komplexen Nahrungsmitteln.

Außerdem umfasst das System Rotationsmittel, die eingerichtet sind, die Ablageplatte einerseits und den Druckkopf und/oder den Garkopf andererseits relativ zueinander um eine Rotationsachse zu drehen, um den Druckkopf und/oder den Garkopf über unterschiedlichen Punkten auf der Ablageplatte zu positionieren. Dabei liegen die unterschiedlichen Punkte auf einem Kreis um die Rotationsachse. Die Relativbewegung zwischen Ablageplatte einerseits und dem Druckkopf und/oder dem Garkopf andererseits kann dadurch bewirkt werden, dass nur die Ablageplatte, nur der Druckkopf bzw. der Garkopf oder sowohl die Ablageplatte als auch der Druckkopf bzw. der Garkopf bewegt werden. Die Rotationsmittel können eingerichtet sein, eine Relativbewegung mit einer bestimmten (ggf. festen) Drehgeschwindigkeit zu bewirken.

Des Weiteren umfasst das System Radialmittel, die eingerichtet sind, einen Radius des Kreises zu verändern. Die Radialmittel sind dafür eingerichtet, den Radius des Kreises zu verändern, auf dem die Punkte auf der Ablageplatte liegen, über denen der Druckkopf positioniert werden kann und den Radius des Kreises zu verändern, auf dem die Punkte auf der Ablageplatte liegen, über denen der Garkopf durch die Rotationsmittel positioniert werden kann. Durch die Rotationsmittel und die Radialmittel können somit über die Anpassung von polaren Koordinaten unterschiedliche Punkte auf der Ablageplatte angefahren werden, um Druckmasse zu extrudieren (anhand des Druckkopfes) und/oder um Druckmasse zu garen (anhand des Garkopfes).

Das System umfasst weiter eine Steuereinheit, die eingerichtet ist, ein Rezept für die Herstellung eines gegarten Nahrungsmittels zu ermitteln. Das Rezept kann z.B. anzeigen, an welchen Punkten Druckmasse auf die Ablageplatte extrudiert werden muss und/oder wie die extrudierte Druckmasse zu garen ist. Die Steuereinheit ist weiter eingerichtet, den Druckkopf, den Garkopf und die Radialmittel in Abhängigkeit von dem Rezept anzusteuern, um das gegarte Nahrungsmittel herzustellen.

Ggf. können auch die Rotationsmittel in Abhängigkeit von dem Rezept angesteuert werden. Alternativ können die Rotationsmittel eine Drehbewegung mit einer festen Drehgeschwindigkeit bewirken. Die unterschiedlichen Punkte auf der Ablageplatte können dann durch Anpassung in radialer Richtung bewirkt werden. Durch eine konstante Drehbewegung kann der Herstellungsprozess eines Nahrungsmittels beschleunigt werden.

Des Weiteren umfasst das System typischerweise ein (abgeschlossenes) Gehäuse, das die Ablageplatte, den Druckkopf, den Garkopf, die Rotationsmittel und die Radialmittel umschließt.

Das System verwendet somit Mittel zur Positionierung des Druckkopfes und/oder des Garkopfes, die eingerichtet sind, den Druckkopf, den Garkopf und/oder die Ablageplatte entlang von ein oder mehreren Polarkoordinaten zu bewegen. So kann eine Bauraum-effiziente und Zeit-effiziente Positionierung des Druckkopfes und/oder des Garkopfes bewirkt werden. Des Weiteren kann so in Bauraum-effizienter, Energie-effizienter und Zeit-effizienter Weise ein gegartes Nahrungsmittel bereitgestellt werden.

Die Radialmittel können eine Radial-Führungsschiene umfassen, die parallel zu der Ablageplatte verläuft. Dabei kann sich die Radial-Führungsschiene quer oberhalb und/oder unterhalb von der Ablageplatte erstecken. Die Radialmittel können weiter ein oder mehrere Radial-Aktuatoren umfassen, die eingerichtet sind, den Druckkopf und den Garkopf und/oder die Ablageplatte entlang der Radial-Führungsschiene zu bewegen. Durch die Bereitstellung einer Radial-Führungsschiene kann eine Bauraum-effiziente Bewegung in radialer Richtung ermöglicht werden.

In einem Beispiel befindet sich die Radial-Führungsschiene oberhalb von der Ablageplatte. Die Radialmittel können dann einen Radial-Aktuator umfassen, der eingerichtet ist, den Druckkopf entlang der Radial-Führungsschiene zu bewegen. So kann der Radius des Kreises verändert werden, auf dem Druckmasse auf die Ablageplatte aufgetragen werden kann. Alternativ oder ergänzend können die Radialmittel einen Radial-Aktuator umfassen, der eingerichtet ist, den Garkopf entlang der Radial-Führungsschiene zu bewegen. So kann der Radius des Kreises verändert werden, auf dem Druckmasse auf der Ablageplatte gegart wird. Die Ablageplatte kann dabei derart fixiert sein, dass die Ablageplatte nicht in radialer Richtung bewegt werden kann.

In einem weiteren Beispiel kann die Radial-Führungsschiene unterhalb von der Ablageplatte angeordnet sein. Die Radialmittel können in diesem Fall einen Radial-Aktuator umfassen, der eingerichtet ist, die Ablageplatte entlang der Radial-Führungsschiene zu bewegen. Durch die Bewegung der Ablageplatte in radialer Richtung können die Radien der Umlauf-Kreise für den Druckkopf und/oder für den Garkopf angepasst werden. Der Druckkopf und/oder der Garkopf können dabei ggf. derart fixiert sein, dass sie nicht in radialer Richtung bewegt werden können.

Die Radialmittel können zumindest eine Längsstange umfassen, die parallel und versetzt zu der Rotationsachse verläuft. Beispielsweise können die ein oder mehreren Längsstangen neben der Ablageplatte verlaufen (z.B. senkrecht zu einem Boden bzw. zu einer Basis des Systems).

Des Weiteren können die Radialmittel eine Druckkopf-Querstange umfassen, die parallel zu der Ablageplatte verläuft und an der der Druckkopf befestigt ist. Außerdem können die Radialmittel einen Dreh-Aktuator umfassen, der eingerichtet ist, die Druckkopf-Querstange um eine der zumindest einen Längsstange zu drehen, um den Druckkopf an unterschiedlichen Punkten über der Ablageplatte zu positionieren. Alternativ oder ergänzend können die Radialmittel eine Garkopf-Querstange umfassen, die parallel zu der Ablageplatte verläuft und an der der Garkopf befestigt ist. Außerdem können die Radialmittel einen Dreh-Aktuator umfassen, der eingerichtet ist, die Garkopf-Querstange um eine der zumindest einen Längsstange zu drehen, um den Garkopf an unterschiedlichen Punkten über der Ablageplatte zu positionieren.

Durch die Bereitstellung einer Längsstange in Kombination mit einer Querstange kann die Anpassung des Radius über eine Drehbewegung und somit in effizienter Weise erfolgen.

Die Ablageplatte kann einen Zentralbereich umfassen, der für die Generierung der räumlichen Anordnung von Druckmasse vorgesehen ist. Der Zentralbereich kann durch einen Randbereich der Ablageplatte umgeben sein. Beispielsweise ist die Ablageplatte kreisförmig, wobei in einem inneren Bereich der kreisförmigen Ablageplatte Druckmasse abgelegt werden kann und wobei der innere Bereich durch einen Rand umgeben wird. Die Rotationsmittel können eingerichtet sein, die Ablageplatte im Randbereich anzutreiben, um die Ablageplatte um die Rotationsachse zu drehen. Beispielsweise können die Rotationsmittel zu diesem Zweck eine Zahnstange umfassen, die im Randbereich der Ablageplatte verläuft. Des Weiteren können die Rotationsmittel einen Aktuator umfassen, der eingerichtet ist, ein Zahnrad anzutreiben, das in die Zahnstange eingreift. Mit anderen Worten, die Rotationsmittel können einen Zahnstangenantrieb umfassen.

Durch das Antreiben der Ablageplatte in einem Randbereich kann der Zentralbereich der Ablageplatte von Unten her zugänglich gemacht werden (z.B. für einen Garprozess). Insbesondere kann das System eine Gareinheit umfassen, die eingerichtet ist, die Ablageplatte von Unten her zu erhitzen (z.B. mittels Induktion). Die Steuereinheit kann dann eingerichtet sein, die Gareinheit in Abhängigkeit von dem Rezept anzusteuern. So kann der Garprozess eines Nahrungsmittels verbessert werden. Die Bereitstellung einer derartigen Gareinheit zur Bereitstellung von Unterboden-Hitze ist insbesondere in Zusammenhang mit einer Ablageplatte vorteilhaft, die in einem Randbereich der Ablageplatte angetrieben wird. So kann eine effiziente Erwärmung der Ablageplatte in dem Zentralbereich ermöglicht werden.

Alternativ oder ergänzend zu einem Antrieb im Randbereich kann die Ablageplatte eine Achse aufweisen, an der die Ablageplatte drehbar gelagert ist. Die Rotationsmittel können dann eingerichtet sein, die Achse (direkt) anzutreiben, um die Ablageplatte zu drehen. So kann in effizienter Weise eine Drehbewegung bewirkt werden.

Das System umfasst Abstandsmittel, die eingerichtet sind, einen Querabstand des Druckkopfes und/oder des Garkopfes senkrecht zu der Ablageplatte zu verändern. Die Abstandsmittel können eingerichtet sein, eine Höhe des Druckkopfes, des Garkopfes und/oder der Abstandsplatte zu verändern. Die Steuereinheit ist dafür eingerichtet, die Abstandsmittel in Abhängigkeit von dem Rezept anzusteuern. Durch die Anpassung des Abstands zwischen Druckkopf bzw. Garkopf und Ablageplatte können der Druckprozess bzw. der Garprozess verbessert werden.

Die Steuereinheit ist dafür eingerichtet, zeitgleich den Druckkopf anzusteuern, um an einem ersten Punkt auf der Ablageplatte Druckmasse zu extrudieren, und den Garkopf anzusteuern, um an einem zweiten Punkt auf der Ablageplatte Druckmasse zu garen. Durch die Bereitstellung eines beweglichen Druckkopfes und eines beweglichen Garkopfes können komplexe Nahrungsmittel erstellt werden.

Es ist zu beachten, dass jegliche Aspekte des in diesem Dokument beschriebenen Systems in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
- Figur 1: ein erstes Beispiel eines Systems zur Herstellung eines Nahrungsmittels;
- Figur 2: ein zweites Beispiel eines Systems zur Herstellung eines Nahrungsmittels;
- Figur 3: ein drittes Beispiel eines Systems zur Herstellung eines Nahrungsmittels;
- Figur 4: ein viertes Beispiel eines Systems zur Herstellung eines Nahrungsmittels;
- Figur 5: ein fünftes Beispiel eines Systems zur Herstellung eines Nahrungsmittels;
- Figur 6: ein sechstes Beispiel eines Systems zur Herstellung eines Nahrungsmittels;
- Figur 7: ein siebtes Beispiel eines Systems zur Herstellung eines Nahrungsmittels;
- Figur 8: ein achtes Beispiel eines Systems zur Herstellung eines Nahrungsmittels; und
- Figur 9: ein neuntes Beispiel eines Systems zur Herstellung eines Nahrungsmittels.

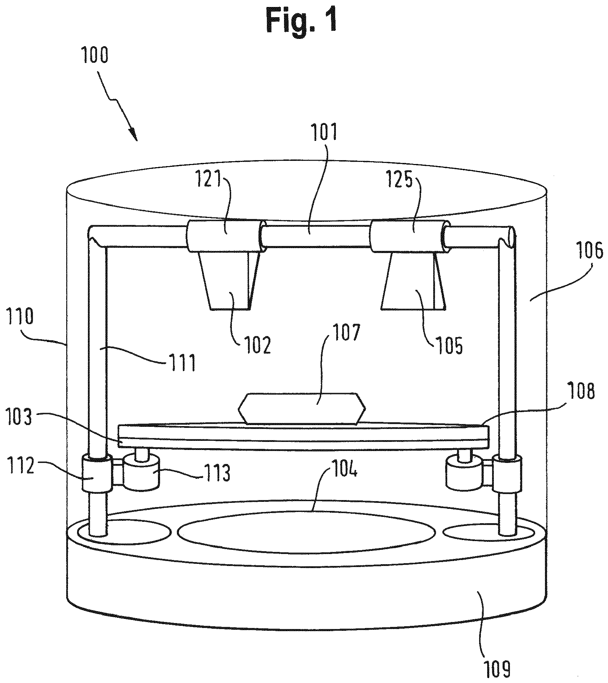

Wie eingangs dargelegt, befasst sich das vorliegende Dokument mit der Zeit-, Bauraum- und Energie-effizienten Herstellung eines Nahrungsmittels mittels eines Nahrungsmitteldruckers. In diesem Zusammenhang zeigt Fig. 1 ein erstes Beispiel eines Systems 100 zur Herstellung eines Nahrungsmittels 107 (d.h. eines Nahrungsmitteldruckers). Das System 100 weist ein Gehäuse 110 auf, das einen Innenraum 106 umschließt und das auf einer Basis 109 steht. Die Basis 109 kann z.B. eine Stromversorgung und/oder eine Steuereinheit (z.B. mit einem Prozessor) umfassen. Das System 100 kann als Hausgerät, insbesondere als ein Haushaltsgerät, ausgebildet sein, das z.B. mit der Basis 109 auf eine Arbeitsfläche einer Küche gestellt werden kann.

Das System 100 umfasst einen Druckkopf 102, der eingerichtet ist, essbare Druckmasse auf eine Ablageplatte 108 zu extrudieren. Durch den Druckkopf 102 kann eine räumliche Anordnung von Druckmasse auf der Ablageplatte 108 erzeugt werden. Des Weiteren umfasst das System 100 einen Garkopf 105, der eingerichtet ist, die räumliche Anordnung von Druckmasse auf der Ablageplatte 108 zu garen. Zu diesem Zweck kann der Garkopf 105 z.B. einen Heizstrahler und/oder einen Laser umfassen. Somit kann der Garkopf 105 eingerichtet sein, die räumliche Anordnung von Druckmasse von Oben her zu garen. Alternativ oder ergänzend kann das System 100 eine Gareinheit 104 umfassen, die eingerichtet ist, die räumliche Anordnung von Druckmasse z.B. von Unten her zu garen. Die Gareinheit 104 kann z.B. eingerichtet sein, die Ablageplatte 108 über elektromagnetische Induktion zu erhitzen.

Das System 100 verwendet polare Bewegungskoordinaten, um den Druckkopf 102 und/oder den Garkopf 105 über unterschiedlichen Punkten auf einer Vorderseite der Ablageplatte 108 zu positionieren. Zu diesem Zweck umfasst das System 100 aus Fig. 1 Rotationsmittel 103, 113, um die Ablageplatte 108 um eine Rotationsachse der Ablageplatte 108 zu drehen, wobei die Rotationsachse senkrecht zu der Ablageplatte 108 verläuft. Durch die Rotationsmittel 103, 113 können der Druckkopf 102 und/oder der Garkopf 105 auf einer Kreisbahn über der Vorderseite der Ablageplatte 108 bewegt werden. In dem in Fig. 1 dargestellten Beispiel sind die Rotationsmittel 103, 113 exzentrisch in Bezug auf die Rotationsachse angeordnet. Dies hat den Vorteil, dass die Gareinheit 104 relativ nah an die Unterseite der Ablageplatte 108 herangeführt werden kann, um die Ablageplatte 108 für den Garprozess zu erhitzen. Die Rotationsmittel 103, 113 umfassen ein Antriebselement 103 (z.B. ein Zahnrad), das durch einen Motor 113 angetrieben wird. Beispielsweise kann ein angetriebenes Zahnrad in eine umlaufende Zahnschiene bzw. Zahnstange auf der Unterseite der Ablageplatte 108 eingreifen, um die Ablageplatte 108 zu rotieren.

Der Druckkopf 102 und/oder der Garkopf 105 können anhand von Radialmitteln 101, 121, 125 parallel zu der Vorderseite der Ablageplatte 108 bewegt werden, um den Radius der Kreisbahn zu verändern. In dem in Fig. 1 dargestellten Beispiel umfassen die Radialmittel 101, 121 eine Radial-Führungsschiene 101, die parallel zu der Vorderseite der Ablageplatte 108 verläuft. Der Druckkopf 102 kann anhand eines Druckkopf-Aktuators 121 entlang der Radial-Führungsschiene 101 bewegt werden, um den Druckkopf 102 zur Rotationsachse der Ablageplatte 108 hin bzw. von der Rotationsachse der Ablageplatte 108 weg zu bewegen. In analoger Weise kann der Garkopf 105 anhand eines Garkopf-Aktuators 125 entlang der Radial-Führungsschiene 101 bewegt werden, um den Garkopf 106 zur Rotationsachse der Ablageplatte 108 hin bzw. von der Rotationsachse der Ablageplatte 108 weg zu bewegen.

So können durch die Kombination der Rotationsmittel 103, 113 und der Radialmittel 101, 121, 125 der Druckkopf 102 und/oder der Garkopf 105 über beliebigen Punkten auf der Vorderseite der Ablageplatte 108 positioniert werden. Die Verwendung von Bewegungsmitteln, die eine Bewegung entlang von Polarkoordinaten ermöglichen, können die unterschiedlichen Punkte auf der Vorderseite der Ablageplatte 108 in Bauraum-effektiver und Zeit-effektiver Weise angefahren werden.

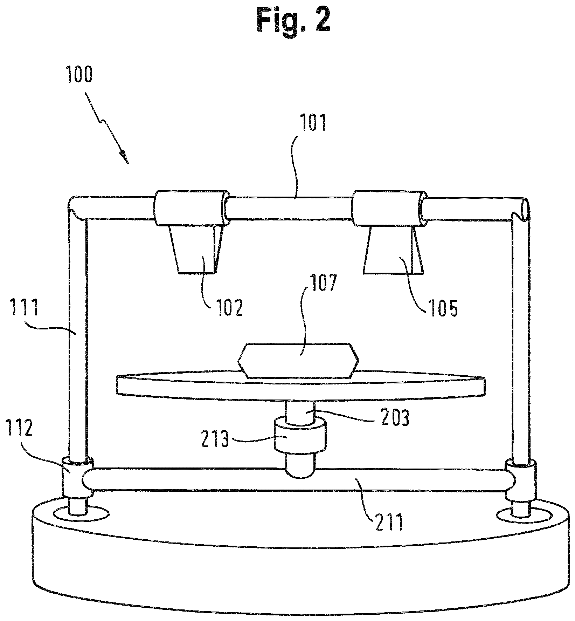

Das in Fig. 1 dargestellte System 100 umfasst weiter Abstandsmittel 111, 112, die eingerichtet sind, den Abstand zwischen dem Druckkopf 102 und/oder dem Garkopf 105 zu verändern. In dem in Fig. 2 dargestellten Beispiel umfassen die Abstandsmittel 111, 112 zwei Abstands-Führungsschienen 111 (in diesem Dokument auch als Längsstangen bezeichnet), die senkrecht zu der Basis 109 und/oder der Ablageplatte 108 verlaufen. Die Ablageplatte 108 ist über die Rotationsmittel 103, 113 und über einen Bewegungsmechanismus 112 (z.B. über ein oder mehrere angetriebene Zahnräder) mit den Abstands-Führungsschienen 111 verbunden und kann so nach oben bzw. nach unten bewegt werden, um den Abstand zwischen dem Druckkopf 102 und/oder dem Garkopf 105 zu reduzieren bzw. zu vergrößern.

Die Rotationsmittel, die Radialmittel und/oder die Abstandsmittel können durch eine Steuereinheit (nicht dargestellt) des Systems 100 angesteuert werden, um den Druckkopf 102 und/oder den Garkopf 105 (typischerweise in Abhängigkeit von einem Rezept für ein herzustellendes Nahrungsmittel 107) an unterschiedliche Positionen zu fahren, um Druckmasse zu extrudieren und/oder um Druckmasse auf der Ablageplatte 108 zu garen.

Fig. 2 zeigt ein System 100 zur Herstellung eines Nahrungsmittels 107, bei dem die Rotationsmittel 203, 213 über eine Querstange 211 mit dem Bewegungsmechanismus 112 verbunden sind. Die Querstange 211 kann durch den Bewegungsmechanismus 112 entlang der Abstands-Führungsschienen 111 hoch- bzw. runtergefahren werden, um den Abstand zwischen der Ablageplatte 108 und dem Druckkopf 102 bzw. dem Garkopf 105 zu verändern.

Wie in Fig. 2 beispielhaft dargestellt, können die Rotationsmittel 203, 213 eine Antriebswelle 203 umfassen, die entlang der Rotationsachse der Ablageplatte 108 verläuft und die durch einen Motor 213 angetrieben wird, um die Ablageplatte 108 zu drehen.

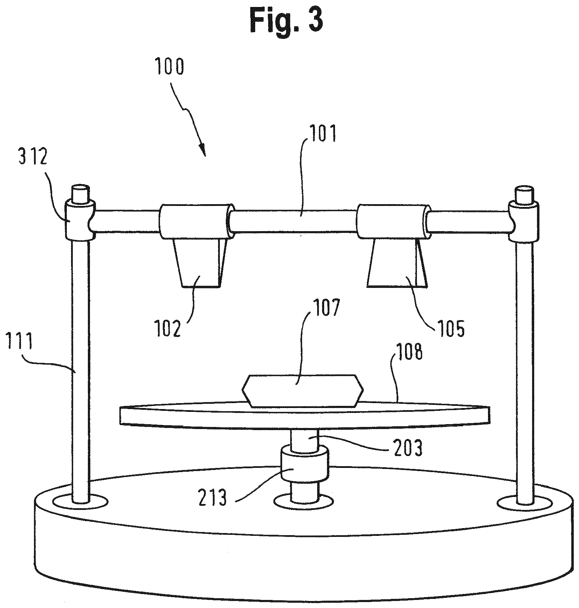

Fig. 3 zeigt ein beispielhaftes System 100, bei dem die Abstandsmittel 111, 312 derart ausgelegt sind, dass die Radial-Führungsschiene 101 über einen Bewegungsmechanismus 312 entlang der Abstands-Führungsschienen 111 hoch- bzw. runtergefahren wird, um den Abstand zwischen der Ablageplatte 108 und dem Druckkopf 102 bzw. dem Garkopf 105 zu verändern.

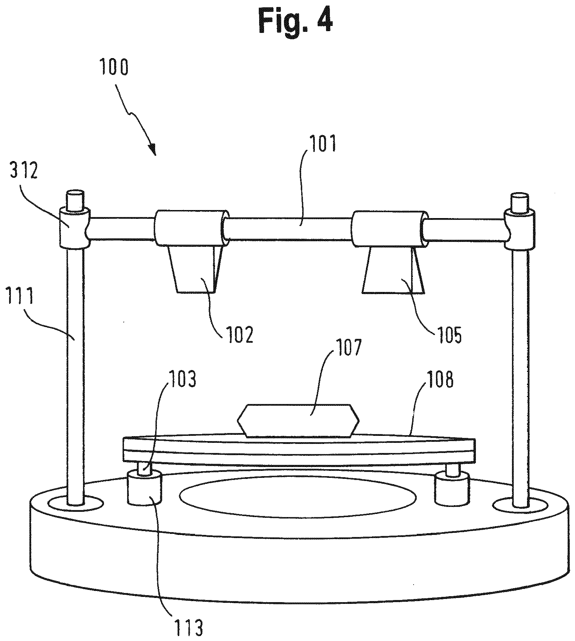

Fig. 4 zeigt ein beispielhaftes System 100, das die Rotationsmittel 103, 113 aus dem System 100 aus Fig. 1 mit den Abstandsmitteln 111, 312 aus Fig. 3 kombiniert.

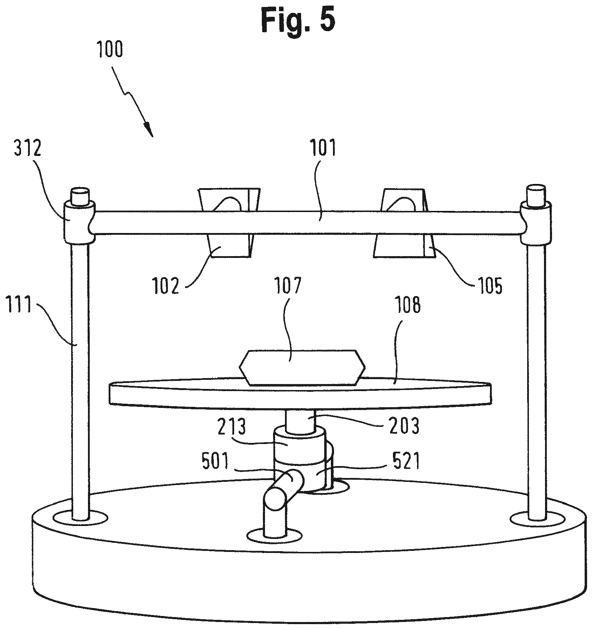

Fig. 5 zeigt ein beispielhaftes System 100, bei dem der Druckkopf 102 und/oder der Garkopf 105 fest mit der Schiene 101 verbunden sind. Die Bewegung in radialer Richtung erfolgt durch eine Radial-Führungsschiene 501, die parallel zu der Basis 109 verläuft und die mit der Basis 109 verbunden ist. Die Ablageplatte 108 ist über einen Aktuator 521 mit der Radial-Führungsschiene 501 verbunden und kann so entlang der Radial-Führungsschiene 501 bewegt werden, um unterschiedliche Punkte auf der Vorderseite der Ablageplatte 108 unter dem Druckkopf 102 und/oder unter dem Garkopf 105 zu positionieren. Die Radialmittel umfassen somit die Radial-Führungsschiene 501 und den Aktuator 521.

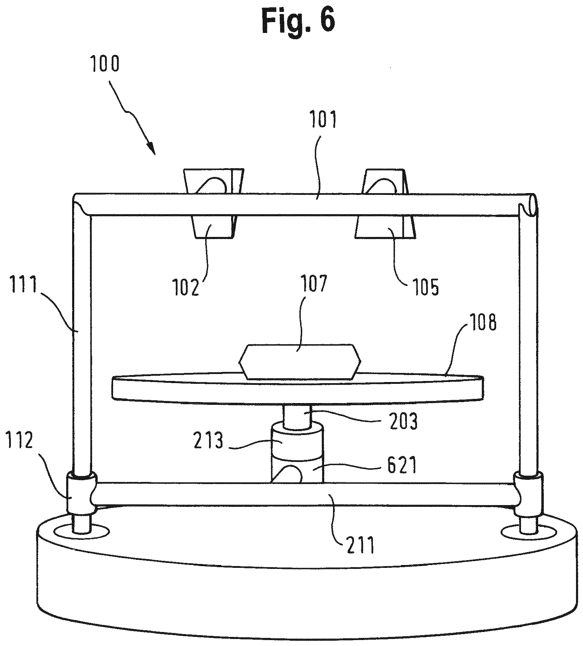

In dem in Fig. 6 dargestellten Beispiel umfassen die Radialmittel die Querstange 211, die als Radial-Führungsschiene ausgebildet ist, um die Abstandsplatte 108 mittels des Aktuators 621 in radialer Richtung zu bewegen. Des Weiteren kann die Radial-Führungsschiene 211 über den Bewegungsmechanismus 112 entlang der Abstands-Führungsschienen 111 nach oben bzw. nach unten gefahren werden, um den Abstand zwischen der Abstandsplatte 108 und dem Druckkopf 102 und/oder dem Garkopf 105 zu verändern.

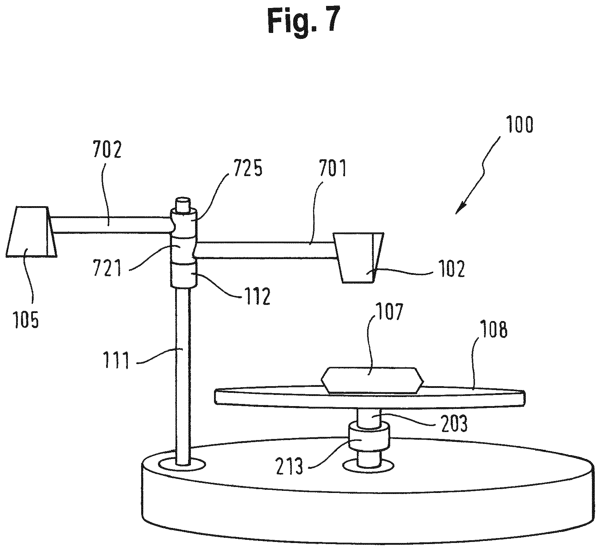

Das in Fig. 7 dargestellte System 100 umfasst Radialmittel 701, 721, mit denen der Druckkopf 102 um die Abstands-Führungsschiene 111 gedreht werden kann, und/oder Radialmittel 702, 725, mit denen der Garkopf 105 um die Abstands-Führungsschiene 111 gedreht werden kann. Die Radialmittel 701, 721 bzw. 702, 725 umfassen jeweils eine Querstange 701, 702 an der der Druckkopf 102 bzw. der Garkopf 105 befestigt ist. Die jeweilige Querstange 701, 702 kann mittels der Aktuatoren 721, 725 um die Abstands-Führungsschiene 111 gedreht werden. Somit können durch Rotationsbewegungen der Radialmittel 701, 721 bzw. 702, 725 und der Rotationsmittel 203, 213 beliebige Punkte auf der Vorderseite der Ablageplatte 108 angefahren werden (ohne Verwendung von translatorischen Bewegungen). Dies kann insbesondere in Bezug auf die erforderliche Verkabelung der Aktuatoren 721, 725 und in Bezug auf den erforderlichen Platzbedarf vorteilhaft sein.

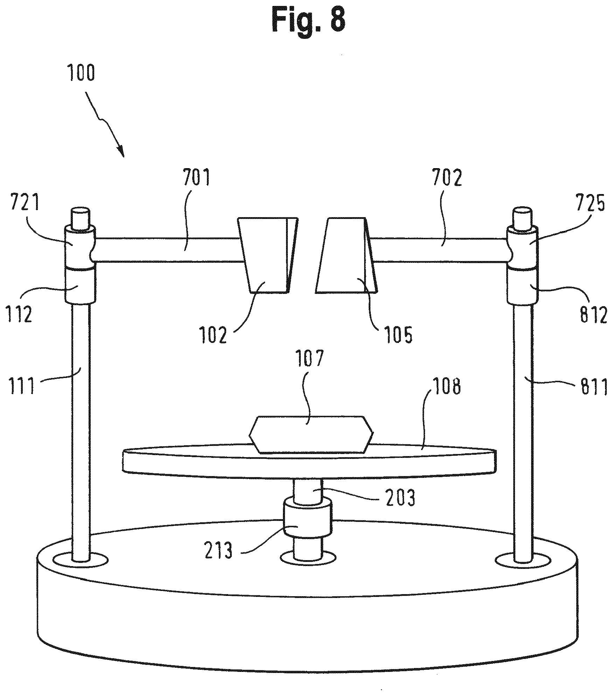

Fig. 8 zeigt ein Beispiel, bei dem die Radialmittel 701, 721 für den Druckkopf 102 und die Radialmittel 702, 725 für den Garkopf 105 an unterschiedlichen Abstands-Führungsschienen 111, 811 angeordnet sind. So kann die Bewegungsfreiheit für den Druckkopf 102 und für den Garkopf 105 erhöht werden. Dabei kann der Abstand des Garkopfes 105 zu der Ablageplatte 108 über einen Bewegungsmechanismus 812 verändert werden.

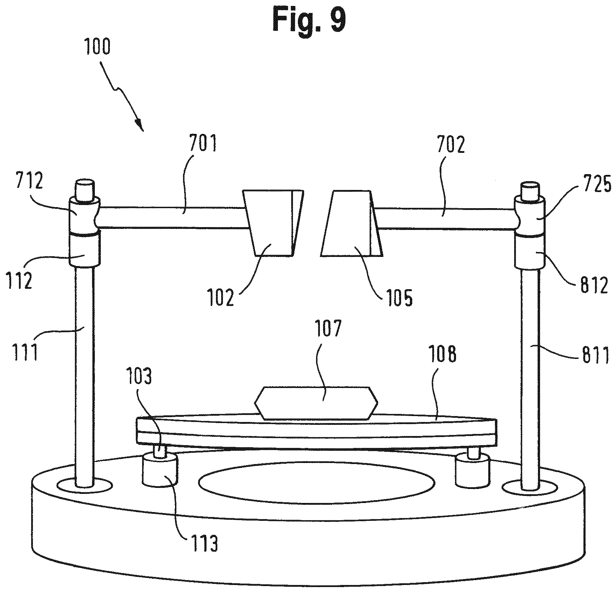

Fig. 9 zeigt ein beispielhaftes System 100, das die Radialmittel 701, 721 bzw. 702, 725 aus Fig. 8 mit den Rotationsmitteln 103, 113 zur Drehung der Ablageplatte 108 aus Fig. 1 kombiniert. So kann die Verwendung von Unterbodenhitze ermöglicht werden.

In diesem Dokument wird ein System 100 beschrieben, das durch die Bewegung eines Druckkopfes 102 und eines Garkopfes 105 entlang von Polarkoordinaten bzw. entlang von Zylinder-Koordinaten eine Bauraum-effiziente und Zeit-effiziente Herstellung eines Nahrungsmittels 107 ermöglicht. Insbesondere können so der Druckprozess und der Garprozess in einem einzigen System 100 integriert werden, was die automatische Herstellung von fertig gegarten Nahrungsmitteln 107 ermöglicht. Durch die in diesem Dokument beschriebenen Rotationsmittel kann die Ablageplatte 108 ggf. kontinuierliche gedreht werden, wodurch der Druckprozess und/oder der Garprozess beschleunigt werden können.

Die vorliegende Erfindung ist nur durch den Gegenstand der Ansprüche begrenzt, und nicht auf die gezeigten Ausführungsbeispiele beschränkt.

Insbesondere ist zu beachten, dass die Beschreibung und die Figuren nur das Prinzip des vorgeschlagenen Systems veranschaulichen sollen.

## Patentansprüche

1. System (100) zur Herstellung eines Nahrungsmittels (107), wobei das System (100) umfasst,
- eine Ablageplatte (108);
- einen Druckkopf (102), der oberhalb der Ablageplatte (108) angeordnet ist und der eingerichtet ist, essbare Druckmasse zu extrudieren, um eine räumliche Anordnung von Druckmasse auf der Ablageplatte (108) zu generieren;
- einen Garkopf (105), der oberhalb der Ablageplatte (108) angeordnet ist und der eingerichtet ist, eine räumliche Anordnung von Druckmasse auf der Ablageplatte (108) zu garen;
- Rotationsmittel (103, 113, 203, 213), die eingerichtet sind, die Ablageplatte (108) einerseits und den Druckkopf (102) und/oder den Garkopf (105) andererseits relativ zueinander um eine Rotationsachse zu drehen, um den Druckkopf (102) und/oder den Garkopf (105) über unterschiedlichen Punkten auf der Ablageplatte (108) zu positionieren; wobei die unterschiedlichen Punkte auf einem Kreis um die Rotationsachse liegen;
- Radialmittel (101, 121, 125, 211, 501, 521, 621, 701, 702, 721, 725), die eingerichtet sind, einen Radius des Kreises zu verändern, wobei ein Radialmittel für den Druckkopf (121, 701, 721) dafür eingerichtet ist, den Radius des Kreises zu verändern, auf dem die Punkte auf der Ablageplatte liegen, über denen der Druckkopf (102) durch die Rotationsmittel positioniert werden kann, und ein Radialmittel für den Garkopf (125, 702, 725) dafür eingerichtet ist, einen weiteren Radius eines weiteren Kreises zu verändern, auf dem die Punkte auf der Ablageplatte liegen, über denen der Garkopf (105) durch die Rotationsmittel positioniert werden kann;
- Abstandsmittel (111, 112, 312, 812), die eingerichtet sind, einen Querabstand des Druckkopfes (102) und/oder des Garkopfes (105) senkrecht zu der Ablageplatte (108) zu verändern, und
- eine Steuereinheit, die eingerichtet ist,
- ein Rezept für die Herstellung eines gegarten Nahrungsmittels (107) zu ermitteln;
- den Druckkopf (102), den Garkopf (105) und die Radialmittel (101, 121, 125, 211, 501, 521, 621, 701, 702, 721, 725) in Abhängigkeit von dem Rezept anzusteuern, um das gegarte Nahrungsmittel (107) herzustellen,
- zeitgleich den Druckkopf (102) anzusteuern, um an einem ersten Punkt auf der Ablageplatte (108) Druckmasse zu extrudieren; und den Garkopf (105) anzusteuern, um an einem zweiten Punkt auf der Ablageplatte (108) Druckmasse zu garen, sowie
- die Abstandsmittel (111, 112, 312, 812) in Abhängigkeit von dem Rezept anzusteuern.

2. System (100) gemäß Anspruch 1, wobei die Radialmittel (101, 121, 125, 211, 501, 521, 621, 701, 702, 721, 725) umfassen,
- eine Radial-Führungsschiene (101, 211, 501), die parallel zu der Ablageplatte (108) verläuft; und
- ein oder mehrere Radial-Aktuatoren (121, 125, 521, 621), die eingerichtet sind, den Druckkopf (102) und den Garkopf (105) und/oder die Ablageplatte (108) entlang der Radial-Führungsschiene (101, 211, 501) zu bewegen.

3. System (100) gemäß Anspruch 2, wobei
- die Radial-Führungsschiene (101) oberhalb von der Ablageplatte (108) angeordnet ist und quer über die Ablageplatte (108) verläuft;
- die Radialmittel (101, 121, 125, 211, 501, 521, 621) einen Radial-Aktuator (121) umfassen, der eingerichtet ist, den Druckkopf (102) entlang der Radial-Führungsschiene (101) zu bewegen; und
- die Radialmittel (101, 121, 125, 211, 501, 521, 621, 701, 702, 721, 725) einen Radial-Aktuator (125) umfassen, der eingerichtet ist, den Garkopf (102) entlang der Radial-Führungsschiene (101) zu bewegen.

4. System (100) gemäß einem der Ansprüche 2 bis 3, wobei
- die bzw. eine weitere Radial-Führungsschiene (211, 501) unterhalb von der Ablageplatte (108) angeordnet ist;
- die Radialmittel (101, 121, 125, 211, 501, 521, 621) einen Radial-Aktuator (521, 621) umfassen, der eingerichtet ist, die Ablageplatte (108) entlang der bzw. der weiteren Radial-Führungsschiene (211, 501) zu bewegen.

5. System (100) gemäß einem der vorhergehenden Ansprüche, wobei die Radialmittel (101, 121, 125, 211, 501, 521, 621, 701, 702, 721, 725) umfassen,
- zumindest eine Längsstange (111, 811), die parallel und versetzt zu der Rotationsachse verläuft; und
- eine Druckkopf-Querstange (701), die parallel zu der Ablageplatte (108) verläuft und an der der Druckkopf (102) befestigt ist, sowie einen Dreh-Aktuator (721), der eingerichtet ist, die Druckkopf-Querstange (701) um eine der zumindest einen Längsstangen (111, 811) zu drehen, um den Druckkopf (102) an unterschiedlichen Punkten über der Ablageplatte (108) zu positionieren; und/oder
- eine Garkopf-Querstange (702), die parallel zu der Ablageplatte (108) verläuft und an der der Garkopf (102) befestigt ist, sowie einen Dreh-Aktuator (725), der eingerichtet ist, die Garkopf-Querstange (702) um eine der zumindest einen Längsstangen (111, 811) zu drehen, um den Garkopf (105) an unterschiedlichen Punkten über der Ablageplatte (108) zu positionieren.

6. System (100) gemäß einem der vorhergehenden Ansprüche, wobei
- die Ablageplatte (108) einen Zentralbereich umfasst, der für die Generierung der räumlichen Anordnung von Druckmasse vorgesehen ist;
- der Zentralbereich durch einen Randbereich der Ablageplatte (108) umgeben wird; und
- die Rotationsmittel (103, 113, 203, 213) eingerichtet sind, die Ablageplatte (108) im Randbereich anzutreiben, um die Ablageplatte (108) um die Rotationsachse zu drehen.

7. System (100) gemäß Anspruch 6, wobei die Rotationsmittel (103, 113, 203, 213) umfasst,
- eine Zahnstange, die im Randbereich der Ablageplatte (108) verläuft; und
- einen Aktuator (113), der eingerichtet ist ein Zahnrad (103) anzutreiben, das in die Zahnstange eingreift.

8. System (100) gemäß einem der vorhergehenden Ansprüche, wobei
- die Ablageplatte (108) eine Achse (203) aufweist, an der die Ablageplatte (108) drehbar gelagert ist; und
- die Rotationsmittel (203, 213) eingerichtet sind, die Achse (203) anzutreiben, um die Ablageplatte (108) zu drehen.

9. System (100) gemäß einem der vorhergehenden Ansprüche, wobei der Garkopf (105) eingerichtet ist,
- thermische Energie auf eine Oberseite der Ablageplatte (108) zu strahlen;
- Laserstrahlen auf die Oberseite der Ablageplatte (108) zu strahlen; und/oder
- Ultraschallwellen auf die Oberseite der Ablageplatte (108) zu strahlen.

10. System (100) gemäß einem der vorhergehenden Ansprüche, wobei die Abstandsmittel (111, 112, 312, 812) eingerichtet sind, eine Höhe des Druckkopfes (102), des Garkopfes (105) und/oder der Abstandsplatte (108) zu verändern.

11. System (100) gemäß einem der vorhergehenden Ansprüche, wobei
- das System (100) eine Gareinheit (104) umfasst, die eingerichtet ist, die Ablageplatte (108) von Unten her zu erhitzen; und
- die Steuereinheit eingerichtet ist, die Gareinheit (104) in Abhängigkeit von dem Rezept anzusteuern.

12. System (100) gemäß einem der vorhergehenden Ansprüche, wobei das System (100) ein Gehäuse (110, 109) umfasst, das die Ablageplatte (108), den Druckkopf (102), den Garkopf (105), die Rotationsmittel (103, 113, 203, 213) und die Radialmittel (101, 121, 125, 211, 501, 521, 621, 701, 702, 721, 725) umschließt.

13. System (100) gemäß einem der vorhergehenden Ansprüche, wobei das System (100) als ein Hausgerät, insbesondere als ein Haushaltsgerät, ausgebildet ist.

## Claims

1. System (100) for producing a foodstuff (107), wherein the system (100) comprises
- a plate (108);
- a printhead (102), which is arranged above the plate (108) and which is configured to extrude edible printing mass, in order to generate a three-dimensional arrangement of printing mass on the plate (108);
- a cooking head (105), which is arranged above the plate (108) and which is configured to cook a three-dimensional arrangement of printing mass on the plate (108);
- rotation means (103, 113, 203, 213), which are configured to rotate the plate (108) on one hand and the printhead (102) and/or the cooking head (105) on the other hand relative to one another around an axis of rotation, in order to position the printhead (102) and/or the cooking head (105) above different points on the plate (108); wherein the different points lies on a circle around the axis of rotation;
- radial means (101, 121, 125, 211, 501, 521, 621, 701, 702, 721, 725), which are configured to change a radius of the circle, wherein a radial means for the printhead (121, 701, 721) is configured to change the radius of the circle on which the points on the plate lie, above which the printhead (102) can be positioned by the rotation means, and a radial means for the cooking head (125, 702, 725) is configured to change a further radius of a further circle on which the points on the plate lie, above which the cooking head (105) can be positioned by the rotation means;- spacing means (111, 112, 312, 812), which are configured to change a transverse distance of the printhead (102) and/or the cooking head (105) perpendicular to the plate (108), and
- a control unit, which is configured
- to establish a recipe for the production of a cooked foodstuff (107);
- to activate the printhead (102), the cooking head (105) and the radial means (101, 121, 125, 211, 501, 521, 621, 701, 702, 721, 725) as a function of the recipe, in order to produce the cooked foodstuff (107),
- simultaneously to activate the printhead (102), in order to extrude printing mass at a first point on the plate (108); and to activate the cooking head (105), in order to cook printing mass at a second point on the plate (108), and also
- to activate the spacing means (111, 112, 312, 812) as a function of the recipe.

2. System (100) according to claim 1, wherein the radial means (101, 121, 125, 211, 501, 521, 621, 701, 702, 721, 725) comprise
- a radial guide rail (101, 211, 501), which runs in parallel to the plate (108); and
- one or more radial actuators (121, 125, 521, 621), which are configured to move the printhead (102) and the cooking head (105) and/or the plate (108) along the radial guide rail (101, 211, 501).

3. System (100) according to claim 2, wherein
- the radial guide rail (101) is arranged above the plate (108) and runs transversely above the plate (108);
- the radial means (101, 121, 125, 211, 501, 521, 621) comprise a radial actuator (121), which is configured to move the printhead (102) along the radial guide rail (101); and
- the radial means (101, 121, 125, 211, 501, 521, 621, 701, 702, 721, 725) comprise a radial actuator (125), which is configured to move the cooking head (102) along the radial guide rail (101);

4. System (100) according to one of claims 2 to 3, wherein
- the or a further radial guide rail (211, 501) is arranged below the plate (108);
- the radial means (101, 121, 125, 211, 501, 521, 621) comprise a radial actuator (521, 621), which is configured to move the plate (108) along the radial guide rail (211, 501);

5. System (100) according to one of the preceding claims, wherein the radial means (101, 121, 125, 211, 501, 521, 621, 701, 702, 721, 725) comprise
- at least one longitudinal bar (111, 811) which runs in parallel and offset in relation to the axis of rotation; and
- a printhead transverse bar (701), which runs in parallel to the plate (108) and to which the printhead (102) is attached, and also a rotation actuator (721), which is configured to rotate the printhead transverse bar (701) around one of the at least one longitudinal bars (111, 811), in order to position the printhead (102) at different positions above the plate (108); and/or
- a cooking head transverse bar (702), which runs in parallel to the plate (108) and to which the cooking head (102) is attached, and also a rotation actuator (725), which is configured to rotate the cooking head transverse bar (702) around one of the at least one longitudinal bars (111, 811), in order to position the cooking head (105) at different positions above the plate (108).

6. System (100) according to one of the preceding claims, wherein
- the plate (108) comprises a central area, which is intended for the generation of the three-dimensional arrangement of printing mass;
- the central area is surrounded by an edge area of the plate (108); and
- the rotation means (103, 113, 203, 213) are configured to drive the plate (108) in the edge area, in order to rotate the plate (108) around the axis of rotation.

7. System (100) according to claim 6, wherein the rotation means (103, 113, 203, 213) comprises
- a toothed bar, which runs in the edge area of the plate (108); and
- an actuator (113), which is configured to drive a toothed wheel (103), which engages into the toothed bar.

8. System (100) according to one of the preceding claims, wherein
- the plate (108) has a shaft (203) on which the plate (108) is rotatably supported; and
- the rotation means (203, 213) are configured to drive the shaft (203), in order to turn the plate (108).

9. System (100) according to one of the preceding claims, wherein the cooking head (105) is configured
- to radiate thermal energy onto the upper side of the plate (108);
- to radiate laser beams onto the upper side of the plate (108); and/or
- to radiate ultrasound waves onto the upper side of the plate (108).

10. System (100) according to one of the preceding claims, wherein the spacing means (111, 112, 312, 812) are configured to change a height of the printhead (102), of the cooking head (105) and/or of the plate (108).

11. System (100) according to one of the preceding claims, wherein
- the system (100) comprises a cooking unit (104), which is configured to heat-up the plate (108) from below; and
- the control unit is configured to activate the cooking unit (104) as a function of the recipe.

12. System (100) according to one of the preceding claims, wherein the system (100) comprises a housing (110, 109) that encloses the plate (108), the printhead (102), the cooking head (105), the rotation means (103, 113, 203, 213) and the radial means (101, 121, 125, 211, 501, 521, 621, 701, 702, 721, 725).

13. System (100) according to one of the preceding claims, wherein the system (100) is embodied as a home appliance, in particular as a household appliance.

## Revendications

1. Système (100) destiné à la fabrication d'une denrée alimentaire (107), dans lequel le système (100) comprend :
- un plateau (108) ;
- une tête d'impression (102) qui est disposée au-dessus du plateau (108) et qui est conçue pour extruder une pâte comestible pour générer un agencement spatial de pâte sur le plateau (108) ;
- une tête de cuisson (105) qui est disposée au-dessus du plateau (108) et qui est conçue pour cuire un agencement spatial de pâte sur le plateau (108) ;
- des moyens de rotation (103, 113, 203, 213) qui sont conçus pour faire tourner le plateau (108) d'une part et la tête d'impression (102) et/ou la tête de cuisson (105) d'autre part les uns par rapport aux autres autour d'un axe de rotation pour positionner la tête d'impression (102) et/ou la tête de cuisson (105) au-dessus de points différents sur le plateau (108) ; dans lequel les différents points se trouvent sur un cercle autour de l'axe de rotation ;
- des moyens radiaux (101, 121, 125, 211, 501, 521, 621, 701, 702, 721, 725) qui sont conçus pour modifier un rayon du cercle, dans lequel un moyen radial pour la tête d'impression (121, 701, 721) est conçu pour modifier le rayon du cercle sur lequel les points se trouvent sur le plateau, au-dessus desquels la tête d'impression (102) peut être positionnée par le biais des moyens de rotation et un moyen radial pour la tête de cuisson (125, 702, 725) est conçu pour modifier un autre rayon d'un autre cercle sur lequel les points se trouvent sur le plateau, au-dessus desquels la tête de cuisson (105) peut être positionnée par le biais des moyens de rotation ;
- des moyens d'écartement (111, 112, 312, 812) qui sont conçus pour modifier un écartement transversal de la tête d'impression (102) et/ou de la tête de cuisson (105) de manière perpendiculaire au plateau (108), et
- une unité de commande qui est conçue
- pour déterminer une recette pour la fabrication d'une denrée alimentaire cuite (107) ;
- pour commander la tête d'impression (102), la tête de cuisson (105) et les moyens radiaux (101, 121, 125, 211, 501, 521, 621, 701, 702, 721, 725) en fonction de la recette pour fabriquer la denrée alimentaire cuite (107),
- pour commander en même temps la tête d'impression (102) pour extruder une pâte au niveau d'un premier point sur le plateau (108) ; et commander la tête de cuisson (105) pour cuire une pâte au niveau d'un second point sur le plateau (108), ainsi que
- pour commander les moyens d'écartement (111, 112, 312, 812) en fonction de la recette.

2. Système (100) selon la revendication 1, dans lequel les moyens radiaux (101, 121, 125, 211, 501, 521, 621, 701, 702, 721, 725) comprennent
- un rail de guidage radial (101, 211, 501) qui s'étend de manière parallèle au plateau (108) ; et
- un ou plusieurs actionneurs radiaux (121, 125, 521, 621) qui sont conçus pour déplacer la tête d'impression (102) et la tête de cuisson (105) et/ou le plateau (108) le long du rail de guidage radial (101, 211, 501).

3. Système (100) selon la revendication 2, dans lequel
- le rail de guidage radial (101) est disposé au-dessus du plateau (108) et à plat en travers du plateau (108) ;
- les moyens radiaux (101, 121, 125, 211, 501, 521, 621) comprennent un actionneur radial (121) qui est conçu pour déplacer la tête d'impression (102) le long du rail de guidage radial (101) ; et
- les moyens radiaux (101, 121, 125, 211, 501, 521, 621, 701, 702, 721, 725) comprennent un actionneur radial (125) qui est conçu pour déplacer la tête de cuisson (102) le long du rail de guidage radial (101).

4. Système (100) selon l'une quelconque des revendications 2 à 3, dans lequel
- le resp. un autre rail de guidage radial (211, 501) est disposé en dessous du plateau (108) ;
- les moyens radiaux (101, 121, 125, 211, 501, 521, 621) comprennent un actionneur radial (521, 621) qui est conçu pour déplacer le plateau (108) le long du resp. autre rail de guidage radial (211, 501).

5. Système (100) selon l'une quelconque des revendications précédentes, dans lequel les moyens radiaux (101, 121, 125, 211, 501, 521, 621, 701, 702, 721, 725) comprennent
- au moins une barre longitudinale (111, 811) qui s'étend de manière parallèle et décalée par rapport à l'axe de rotation ; et
- une barre transversale de tête d'impression (701) qui s'étend de manière parallèle au plateau (108) et à laquelle est fixée la tête d'impression (102), ainsi qu'un actionneur de rotation (721) qui est conçu pour faire tourner la barre transversale de tête d'impression (701) autour d'une de l'au moins une barre longitudinale (111, 811) pour positionner la tête d'impression (102) au niveau de différents points au-dessus du plateau (108) ; et/ou
- une barre transversale de tête de cuisson (702) qui s'étend de manière parallèle au plateau (108) et à laquelle est fixée la tête de cuisson (102) ainsi qu'un actionneur de rotation (725) qui est conçu pour faire tourner la barre transversale de tête de cuisson (702) autour d'une de l'au moins une barre longitudinale (111, 811) pour positionner la tête de cuisson (105) au niveau de différents points au-dessus du plateau (108).

6. Système (100) selon l'une quelconque des revendications précédentes, dans lequel
- le plateau (108) comprend une zone centrale qui est prévue pour la génération de l'agencement spatial de pâte ;
- la zone centrale est entourée par une zone de bord du plateau (108) ; et
- les moyens de rotation (103, 113, 203, 213) sont conçus pour entraîner le plateau (108) dans la zone de bord pour faire tourner le plateau (108) autour de l'axe de rotation.

7. Système (100) selon la revendication 6, dans lequel les moyens de rotation (103, 113, 203, 213) comprennent
- une crémaillère qui s'étend dans la zone de bord du plateau (108) ; et
- un actionneur (113) qui est conçu pour entraîner une roue dentée (103) qui s'engrène dans la crémaillère.

8. Système (100) selon l'une quelconque des revendications précédentes, dans lequel
- le plateau (108) présente un axe (203) au niveau duquel le plateau (108) est monté de manière rotative ; et
- les moyens de rotation (203, 213) son conçus pour entraîner l'axe (203) pour faire tourner le plateau (108).

9. Système (100) selon l'une quelconque des revendications précédentes, dans lequel la tête de cuisson (105) est conçue
- pour faire rayonner de l'énergie thermique sur une face supérieure du plateau (108) ;
- faire rayonner un rayon laser sur la face supérieure du plateau (108) ; et/ou
- faire rayonner des ondes ultrasonores sur la face supérieure du plateau (108).

10. Système (100) selon l'une quelconque des revendications précédentes, dans lequel les moyens d'écartement (111, 112, 312, 812) sont conçus pour modifier une hauteur de la tête d'impression (102), de la tête de cuisson (105) et/ou du plateau (108).

11. Système (100) selon l'une quelconque des revendications précédentes, dans lequel
- le système (100) comprend une unité de cuisson (104) qui est conçue pour réchauffer le plateau (108) par le bas ; et
- l'unité de commande est conçue pour commander l'unité de cuisson (104) en fonction de la recette.

12. Système (100) selon l'une quelconque des revendications précédentes, dans lequel le système (100) comprend un boîtier (110, 109) qui entoure le plateau (108), la tête d'impression (102), la tête de cuisson (105), les moyens de rotation (103, 113, 203, 213) et les moyens radiaux (101, 121, 125, 211, 501, 521, 621, 701, 702, 721, 725).

13. Système (100) selon l'une quelconque des revendications précédentes, dans lequel le système (100) est réalisé en tant qu'appareil ménager, en particulier en tant qu'appareil électroménager.
